# EUROPÄISCHE PATENTANMELDUNG

(11) **EP 2 903 136 A1**
(43) Veröffentlichungstag der Anmeldung: **05.08.2015**
(21) Anmeldenummer: 14153448.7
(22) Anmeldetag: 31.01.2014
(51) Int. Cl.: H02K 1/24, H02K 1/28

(54) **Reluktanzrotorblech mit Aussparung zur Spannungsreduktion**

(71) Anmelder: Siemens Aktiengesellschaft, 80333 München (DE)
(72) Erfinder: Ballweg, Marion, 97494 Bundorf (DE); Büttner, Klaus, 97618 Hollstadt (DE)

(57) **Zusammenfassung**

Es soll ein Reluktanzrotorblech vorgeschlagen werden, das eine einfache Montage eines Rotors insbesondere durch Presspassung erlaubt, wobei ausreichende Stabilität gegeben sein muss. Dazu wird ein Reluktanzrotorblech (18) bereitgestellt, bei dem in dem jedem Flussleitabschnitt (24) auf der jeweiligen d-Achsenhälfte (32) eine Aussparung (6, 42) zur Spannungsreduktion angeordnet ist, so dass zu beiden Seiten der jeweiligen d-Achsenhälfte (32) in dem jeweiligen Flussleitabschnitt (24) je ein Teilleitabschnitt (36, 37) gebildet ist. Die Summe des jeweils kleinsten Querschnitts beider Teilleitabschnitte (36, 37) ist im Wesentlichen größer oder gleich einer kleinsten, zu der jeweiligen d-Achsenhälfte (32) senkrechten Querschnittsfläche des Flussleitabschnitts (36, 37) radial oberhalb der Aussparung, so dass durch die Aussparung (6, 42) keine magnetische Beeinträchtigung erfolgt.

## Beschreibung

Die vorliegende Erfindung betrifft ein Reluktanzrotorblech, das im Wesentlichen kreisscheibenförmig ausgebildet ist. Es besitzt eine Zentralaussparung im Zentrum und einen von der Zentralaussparung bis zu einem am Außenrand des Reluktanzrotorblechs befindlichen Verbindungsring sich radial erstreckenden Flussleitabschnitt entlang einer d-Achse (magnetische Vorzugsrichtung).

Derartige Reluktanzrotorbleche mit entsprechenden Aussparungen sind aus der Patentschrift US 5,818,140 A bekannt. Aus den Reluktanzrotorblechen lässt sich ein Blechpaket und ein entsprechender Rotor fügen. Durch die Ausstanzungen ergeben sich geschwungene, streifenförmige Blechabschnitte, die als Flussleitabschnitte dienen und den magnetischen Fluss in der für die Bereitstellung der nötigen Reluktanz des Rotors nötigen Weise führen. Zwischen den einzelnen Flussleitabschnitten befindet sich durch die Ausstanzungen Luft, d.h. ein unmagnetischer Bereich, der als magnetische Flusssperre wirkt. Durch die streifenförmigen Flussleitabschnitte ergibt sich eine hohe Drehmomentausbeute. Die magnetische Permeabilität des Blechpakets ist in Richtung der q-Achse, d.h. der magnetischen Sperrrichtung aufgrund der unmagnetischen Bereiche verhältnismäßig klein. Die streifenförmigen Flussleitabschnitte verlaufen quer zu der q-Achse und verbinden in Umfangsrichtung benachbarte Pole des Rotors, die jeweils auf d-Achsen (magnetische Vorzugsrichtungen) angeordnet sind. Die Ausstanzungen zum Bereitstellen der unmagnetischen Bereiche bzw. zum Ausbilden der Flussleitabschnitte führen aber zu einer Schwächung der mechanischen Stabilität des Blechpakets, so dass der beschriebene Rotor nicht für große Drehzahlen, insbesondere nicht für Drehzahlen größer 3000 Umdrehungen/Minute geeignet ist. Aus diesem Grund sind Reluktanzmotoren der beschriebenen Art nicht für die Drehzahlanforderungen im Bereich beispielsweise von Kraftfahrzeugen mit elektrischen Antrieben geeignet.

Speziell ist also das Rotorblech eines Reluktanzmotors (kurz: Reluktanzrotorblech) aufgrund der Funktionsweise bezogen auf die d- und q-Achse von hoher unterschiedlicher radialer Stabilität ausgeführt. So ist die d-Achse mit einem Flussleitabschnitt vom Innen- zum Außendurchmesser durchgehend aus Blech gebildet, während die q-Achse durch Flusssperren unterbrochen ist.

Die Rotorbleche werden beispielsweise durch einen zylindrischen Presssitz auf die Welle gefügt. Bei hohen Drehzahlen ist das Übermaß der Pressung höher auszuführen, da es durch die Fliehkraft zu einer Aufweitung des Rotorblechs im Innendurchmesser kommt und die Drehmomentenübertragung auf die Welle reduziert wird. Passfedern zur Drehmomentenübertragung wären zusätzlich ungünstig, da die in die Bleche einzubringende Nut die Stabilität weiter reduzieren würde.

Durch die unterschiedliche Stabilität in den Achsen kommt es beim Aufpressen zu unterschiedlichen Verformungen und damit zu unzulässigen Spannungen an den äußeren Stegen bzw. am äußeren Verbindungsring des Rotorblechs, insbesondere am Steg direkt neben der d-Achse. Das durchgängige Material in der d-Achse wird als Verformung vom Innen- zum Außendurchmesser durchgereicht, während im benachbarten Bereich aufgrund der Flusssperren keine Verformung von innen nach außen ankommt.

Zusätzlich werden die Stege, die die Flussleitabschnitte zusammenhalten, durch die Fliehkraft bei Drehung stark belastet. Bei einer relativ hohen Zugspannung, die bereits durch die Presspassung hervorgerufen werden kann, bleibt für die Fliehkraftbelastung keine oder nur wenig Reserve. Ein derartiger Reluktanzrotor ist also nur für relativ niedrige Drehzahlen geeignet.

Eine mögliche Optimierung besteht darin, zwischen Welle und Rotorblech Formschlüsse zu integrieren, um die Kräfte der Presspassung zurücknehmen und gleichzeitig ein hohes Moment übertragen zu können. In Bezug auf Formschlüsse können Nuten und Federn, Abflachungen oder aber Wellen mit Polygonquerschnitten verwendet werden. Mit diesen Maßnahmen lassen sich zwar die Zugspannungen aufgrund der nicht notwendigen Presspassung vermeiden, aber, wie oben angedeutet, wird das Blech durch Nuten unter Umständen zusätzlich destabilisiert und die Herstellung bzw. Fügung der Wellen ist kompliziert.

Die Aufgabe der vorliegenden Erfindung besteht somit darin, ein Reluktanzrotorblech vorzuschlagen, mit dem ein einfach herzustellender Rotor aufgebaut werden kann, welcher keinen übermäßigen Zugspannungen ausgesetzt ist.

Erfindungsgemäß wird diese Aufgabe gelöst durch ein Reluktanzrotorblech
- das im Wesentlichen kreisscheibenförmig ausgebildet ist und eine oder mehrere d-Achsen aufweist, wobei jede d-Achse getrennt durch das Zentrum des Reluktanzmotorblechs zwei d-Achsenhälften besitzt, mit
- einer Zentralaussparung im Zentrum des Reluktanzrotorblechs und
- je einem von der Zentralaussparung bis zu einem am Außenrand des Reluktanzrotorblechs befindlichen Verbindungsrings sich radial erstreckenden Flussleitabschnitt entlang jeder d-Achsenhälfte, wobei
- in dem jedem Flussleitabschnitt auf der jeweiligen d-Achsenhälfte eine Aussparung zur Spannungsreduktion angeordnet ist, so dass zu beiden Seiten der jeweiligen d-Achsenhälfte in dem jeweiligen Flussleitabschnitt je ein Teilleitabschnitt gebildet ist, und
- die Summe des jeweils kleinsten Querschnitts beider Teilleitabschnitte im Wesentlichen größer oder gleich einer kleinsten, zu der jeweiligen d-Achsenhälfte senkrechten Querschnittsfläche des Flussleitabschnitts radial oberhalb der Aussparung ist.

In vorteilhafter Weise wird durch die Aussparung in jedem Flussleitabschnitt der mehreren d-Achsenhälften die Steifigkeit des Reluktanzrotorblechs in Richtung der d-Achse vermindert. Die Aussparung ist dabei so angeordnet und/oder geformt, dass der jeweilige Flussleitabschnitt nicht weiter verengt wird als die Verengung, die der Flussleitabschnitt an seiner engsten Stelle ohne die Aussparung besitzt. Dies bedeutet, dass der magnetische Fluss nicht mehr beeinträchtigt wird als an der schmalsten zusammenhängenden Stelle des Flussleitabschnitts, die typischerweise radial ganz außen an dem Verbindungsring liegt. Damit ist ein idealer Kompromiss zwischen der Reduktion der Steifigkeit und der magnetischen Beeinträchtigung gefunden.

Die Aussparung zur Spannungsreduktion kann vollständig vom Material des Reluktanzrotorblechs umgeben sein. Dies bedeutet, dass die Aussparung vollständig innerhalb des jeweiligen Flussleitabschnitts liegt. Dies hat den Vorteil, dass die Zentralaussparung an ihrem gesamten Umfang reibschlüssig auf einer rein zylindrischen Welle angeordnet sein kann.

Bei einer alternativen Ausführungsform ist ein Hohlraum der Aussparung mit einem Hohlraum der Zentralaussparung in Verbindung. Dies bedeutet, dass die beiden Hohlräume direkt ineinander übergehen bzw. die Grenzen der Hohlräume einander schneiden bzw. ineinander übergehen.

Speziell können zwei der d-Achsen (32) senkrecht zueinander und zwei q-Achsen (30) winkelhalbierend zwischen den d-Achsen (32) angeordnet sein, wobei geschwungene, streifenförmige Blechabschnitte senkrecht an den q-Achsen (30) angeordnet sind und die Blechabschnitte voneinander durch Ausstanzungen (22) getrennt sind. Damit lässt sich ein vierpoliger Reluktanzrotor realisieren, dessen Pole jeweils um 90° versetzt angeordnet sind. In der Mitte zwischen jeweils zwei benachbarten Polen befinden sich die q-Achsen mit der magnetischen Sperrrichtung. Benachbarte q- und d-Achsen sind also zueinander um 45° versetzt.

Ferner kann das Reluktanzrotorblech zusätzlich zu der oder den Aussparungen zur Spannungsreduktion mindestens eine Kennmarkenaussparung aufweisen. Neben der Zentralaussparung, den Aussparungen zur Spannungsreduktion und den Ausstanzungen zwecks Flussreduktion ist also zusätzlich mindestens eine Aussparung als Kennmarke vorgesehen, um die Orientierung des Reluktanzrotorblechs einfacher zu erfassen. Dies ist bei der Paketierung hilfreich. Derartige Kennmarkenaussparungen sind in der Regel wesentlich kleiner als alle anderen Ausstanzungen, da sie weder den magnetischen Fluss noch die mechanische Stabilität beeinflussen sollen.

Aus einer Vielzahl derartiger Reluktanzrotorbleche kann ein Blechpaket gebildet werden, welches auf eine Welle gefügt werden kann. Dabei ist es vorteilhaft, wenn die Welle rotatorisch nur durch Reibschluss mit dem Blechpaket verbunden ist. Dies bedeutet, dass die Zentralaussparung abgesehen von weiteren Aussparungen, die in sie hineinragen, kreisförmig sein kann und ebenso die Welle rein kreiszylindrisch gebildet werden kann. Dadurch lässt sich ein sehr einfacher Aufbau der Welle realisieren.

Des Weiteren kann das Blechpaket geschrägt sein. Dabei sind die einzelnen Bleche des Blechpakets rotatorisch zueinander um einen geringen Winkelbetrag versetzt, wodurch die

Drehmomentenwelligkeit einer elektrischen Maschine und insbesondere eines Synchron-Reluktanzmotors reduziert werden kann.

Vorzugsweise besitzen die Aussparungen auf jeder einzelnen d-Achse oder auf allen d-Achsen gleiche Abmessungen. Ebenso sollten die Aussparungen auf jeder einzelnen d-Achse oder auf allen d-Achsen den gleichen Abstand zum Zentrum des Reluktanzrotorblechs besitzen. Dadurch können Spannungen in allen Bereichen des Reluktanzrotorblechs verringert werden.

Die vorliegende Erfindung wird nun anhand der beigefügten Zeichnungen näher erläutert, in denen zeigen:
- FIG 1: ein Reluktanzrotorblech gemäß der vorliegenden Erfindung und
- FIG 2: ein Rotorblechpaket mit einer Vielzahl von Reluktanzrotorblechen gemäß FIG 1.

Die nachfolgend näher geschilderten Ausführungsbeispiele stellen bevorzugte Ausführungsformen der vorliegenden Erfindung dar.

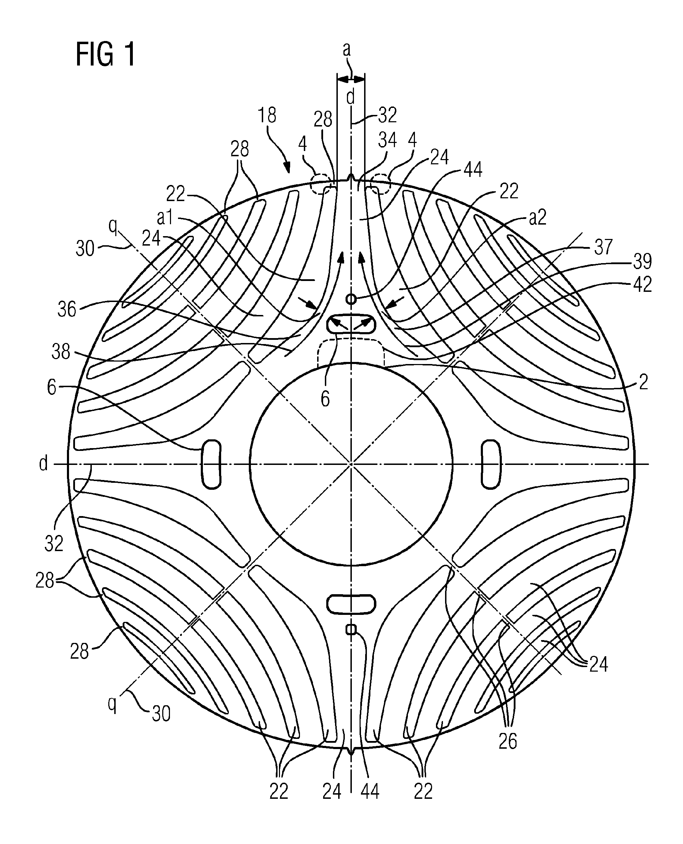

Das in FIG 1 abgebildete Reluktanzrotorblech 18 weist Aussparungen 22 auf, die magnetische Sperren bilden. Die Aussparungen 22 werden, wie alle übrigen Aussparungen auch, typischerweise durch Ausstanzung gebildet. Sie bilden unmagnetische Bereiche und fungieren also als magnetische Flusssperren. Zwischen den Aussparungen 22 ergeben sich somit Flussleitstücke, in denen der magnetische Fluss bei betriebsgemäßer Magnetisierung geführt wird.

Das in FIG 1 dargestellte Reluktanzrotorblech 18 dient für einen vierpoligen Reluktanzrotor. Dementsprechend weist das Reluktanzrotorblech 18 zwei senkrecht zueinander stehende d-Achsen auf, die magnetische Vorzugsrichtungen darstellen und die durch das Zentrum des Reluktanzrotorblechs 18 getrennt jeweils d-Achsenhälften 32 besitzen. Die Vorzugsrichtungen sind geprägt durch Flussleitstücke 24, die größtenteils durchgehend auf den jeweiligen d-Achsenhälften 32 verlaufen, wenn von einer Zentralaussparung 2 abgesehen wird, die zur Aufnahme einer Welle dient.

Die Aussparungen 22, welche als Magnetsperre dienen, verlaufen im Wesentlichen bogenförmig von einem Pol zum benachbarten Pol. Darüber hinaus sind sie im Wesentlichen streifenförmig. Aus Stabilitätsgründen können sie von Stegen 26 unterbrochen sein. Zwischen den bogenförmigen, streifenförmigen Aussparungen 22 ergeben sich somit ebenfalls streifenförmige, bogenförmige Flussleitabschnitte 24.

Die bogenförmigen, nicht magnetischen Aussparungen 22 zwischen benachbarten Polen verlaufen senkrecht zu den q-Achsen 30, die winkelhalbierend zwischen den d-Achsen liegen. Auf den q-Achsen 30 erfolgt also Magnetfeldsperrung. Zur näheren Wirkungsweise sei auf das eingangs erwähnte US-Patent 5,818,140 A von Vagati verwiesen.

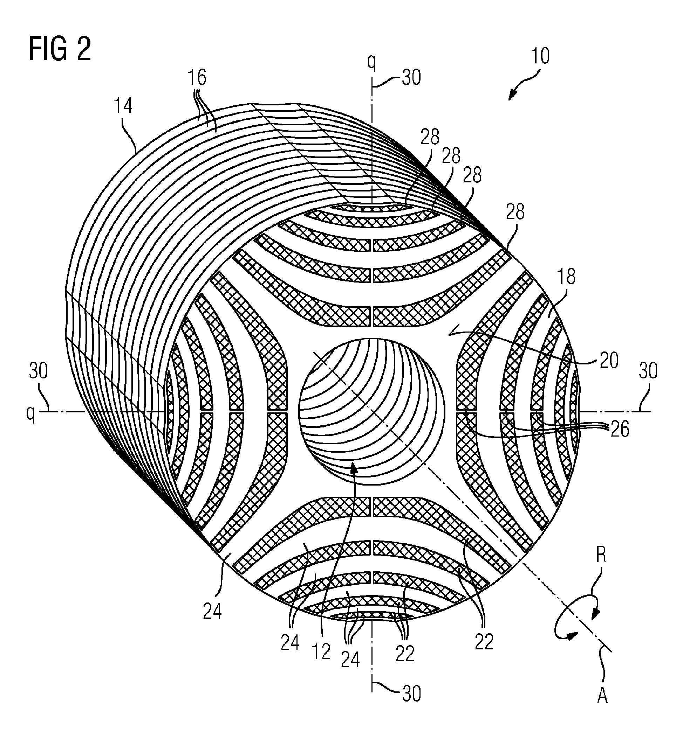

In FIG 2 ist ein Reluktanzrotor oder kurz Rotor 10 ohne Welle gezeigt. Der Rotor 10 kann in einen Reluktanzmotor eingebaut sein. Beispielsweise kann der Reluktanzmotor ein Antriebsmotor für ein elektrisch angetriebenes Kraftfahrzeug sein. Im eingebauten Zustand ist durch eine Durchgangsöffnung 12 des Rotors 10, die durch die Zentralaussparungen 2 gebildet wird, eine in FIG 2 nicht dargestellte Welle des Reluktanzmotors gesteckt. Vorzugsweise ist der Rotor 10 auf die Welle gepresst. Die Welle und damit der Rotor 10 ist dann um eine Rotationsachse A drehbar gelagert, so dass der Rotor 10 in einem (nicht dargstellten) Stator des Reluktanzmotors eine Rotation R um die Rotationsachse A vollführen kann. Ein Durchmesser des Rotors 10 in radialer Richtung kann beispielsweise 20 cm und mehr betragen. Eine Länge des Rotors 10 in axialer Richtung kann beispielsweise 30 cm und mehr betragen.

Der Rotor 10 weist als magnetisch aktiven Teil ein Blechpaket 14 auf, das aus mehreren Schichten 16 gebildet ist, die jeweils weichmagnetisches, insbesondere ferromagnetisches, Material aufweisen. Dieses Material stammt von den Einzelblechen gemäß FIG 1. Die Schichten weisen ferner elektrisch isolierende Teilschichten auf, um Wirbelströme in dem Blechpaket 14 zu blockieren. Von den Schichten 16 sind in FIG 2 der Übersicht halber nur einige mit einem Bezugszeichen versehen.

Jede Schicht 16 wird im Wesentlichen also durch ein Rotorblech 18 gebildet. In der FIG 2 ist nur das Rotorblech 18, welches sich an einer Stirnseite 20 in axialer Richtung entlang der Achse A an einem vorderen Ende befindet, mit einem Bezugszeichen versehen.

Die Rotorbleche 18 sind in der Weise fluchtend in dem Blechpaket 14 axial hintereinander angeordnet, dass die Aussparungen 22 und entsprechend auch die Flussleitabschnitte 24 axial fluchten, soweit keine Schrägung vorgesehen ist. Die Rotorbleche der Schichten 16 können alle die gleiche Form aufweisen.

Damit der Rotor 10 am Außenmantel geschlossen ist, besitzt jedes Rotorblech 18 an seinem Außenrand einen geschlossenen Verbindungsring 28. Er fixiert auch die Flussleitabschnitte 24.

Das Beispiel in den FIG 1 und 2 bezieht sich auf einen vierpoligen Rotor. Die Polzahl kann aber auch größer gewählt sein. Im günstigsten Fall ist die Durchgangsöffnung 12 des Rotors 10 kreiszylinderförmig und die dazugehörige Welle ist ebenfalls kreiszylinderförmig. Der Rotor 10 bzw. das Blechpaket 14 wird dann durch Pressung auf die Welle gefügt. Das Drehmoment wird somit allein durch Reibschluss vom Rotor zur Welle übertragen. Die Presspassung ist entsprechend dem geforderten Drehmoment auszulegen und kann sehr hohe Kräfte mit sich bringen. Aufgrund der Struktur der Reluktanzrotorbleche 18 wird die Kraft entlang der d-Achsen 32 bei bekannten Blechschnitten praktisch unvermindert von der Zentralaussparung 2 nach außen zum Verbindungsring 28 geführt, da die Flussleitabschnitte eben bei diesen bekannten Blechschnitten durchgehend von der Zentralaussparung 2 zum Verbindungsring 28 reichen. In den Bereichen des Verbindungsrings zwischen den Polen bzw. d-Achsen 32 wird die Kraft der Presspassung nur vermindert oder gar nicht übertragen, da die Aussparungen 22 dies unterbinden. Deswegen ergeben sich in den Bereichen 4 des Verbindungsrings 28 sehr hohe Zugspannungen, welche zur Zerstörung der Rotorbleche 18 und damit des Rotors 10 führen können.

Um die Verformung bzw. Zugspannungen in den Bereichen 4 der Verbindungsringe 28 auf jeder d-Achsenhälfte zu reduzieren, werden erfindungsgemäß Aussparungen 6 im Bereich der d-Achsen bzw. d-Achsenhälften 32 eingebracht. Eine solche Aussparung 6, die ebenfalls durch Ausstanzung bewirkt werden kann, unterbricht eine direkte Kraftlinie entlang der jeweiligen d-Achsehälfte 32. Die Aussparung 6 kann sich verformen, so dass sich geringere Verformungen des Verbindungsrings 28 im Bereich der jeweiligen d-Achsenhälfte 32 und damit auch geringere Zugspannungen in den Bereichen 4 der Verbindungsringe 28 ergeben. Damit ist die Bruch- bzw. Beschädigungsgefahr in diesen Bereichen deutlich reduziert.

Eine Aussparung 6 sollte so dimensioniert sein, dass sie magnetisch kaum Auswirkungen besitzt. Dies kann dadurch erreicht werden, dass der magnetische Fluss in dem Flussleitstück 24 im Bereich der d-Achse nicht stärker behindert wird als an seiner engsten Stelle in Flussrichtung. Der Fluss sollte also keine engeren Einschnitte erhalten als bei einem Blechschnitt ohne die Aussparungen 6.

Die engste Stelle 34 für den magnetischen Fluss im Bereich der Pole liegt am Übergang des Flussleitstücks 24, welches entlang der jeweiligen d-Achsenhälfte 32 verläuft, zu dem Verbindungsring 28. Das Blech dort wird durch die angrenzenden Aussparungen 22 verjüngt, welche hier am nächsten aufeinander zukommen. Es ergibt sich somit am Innenrand des Verbindungsrings 28 eine Engstelle der Breite a. Erfindungsgemäß sollte der magnetische Fluss in dem Flussleitstück 24 nicht weiter eingeschränkt sein als an der Engstelle 34.

Durch die Aussparung 6 in dem Flussleitabschnitt 24 wird dieser bereichsweise zweigeteilt und es entstehen links und rechts von der Aussparung 6 Teilleitabschnitte 36 und 37. Die Teilleitabschnitte 36 und 37 verlaufen also jeweils zwischen der Aussparung 6 zur Spannungsreduktion und der angrenzenden Aussparung 22 zur Flusssperrung. Jeder der Teilleitabschnitte 36, 37 besitzt für den jeweiligen magnetischen Teilfluss 38, 39 in dem jeweiligen Teilleitabschnitt 36, 37 eine Engstelle der Breite a1 bzw. a2. Diese Engstellen sind durch den kleinsten Querschnitt des jeweiligen Teilleitabschnitts 36, 37 charakterisiert. Damit also der magnetische Fluss durch die Aussparung 6 nicht weiter eingeschränkt wird als durch die Engstelle 34, darf die Summe der kleinsten Querschnittsfläche des einen Teilleitabschnitts 36 und der kleinsten Querschnittsfläche des anderen Teilleitabschnitts 37 nicht kleiner als die Querschnittsfläche des Flussleitabschnitts 24 an der Engstelle 34 sein. Da das Reluktanzrotorblech überall gleich dick ist, muss gelten: a1+a2 ≥ a.

Damit die Spannungsentlastung in dem Flussleitabschnitt 24 auf der d-Achsenhälfte 32 möglichst groß ist, sollte die Aussparung 6 zur Spannungsreduktion auch möglichst groß sein. Um gleichzeitig die obige Bedingung einhalten zu können, wird günstigerweise die Summe des jeweils kleinsten Querschnitts beider Teilleitabschnitte 36, 37 im Wesentlichen gleich der kleinsten, zu der d-Achse 32 senkrechten Querschnittsfläche des Flussleitabschnitts 24 radial oberhalb der Aussparung 6 gewählt. Vorzugsweise gilt dann: a1+a2=a.

Der magnetisch relevante kleinste Querschnitt an der Engstelle 34 befindet sich in der Regel senkrecht zu der d-Achse 32, da sich der magnetische Fluss in diesem Bereich im Wesentlichen parallel zur d-Achse 32 bewegt.

Auf jeder d-Achsenhälfte 32 befindet sich also eine Aussparung 6. Der Ort der Aussparung 6 auf der jeweiligen d-Achsenhälfte 32 ist prinzipiell frei wählbar, solange obige Ungleichung eingehalten wird. Dementsprechend kann es sich wie in dem Beispiel von FIG 1 bei der Aussparung 6 um eine geschlossene Aussparung handeln, die vollständig von dem Blechmaterial umgeben ist. Gegebenenfalls kann die Aussparung 6 aber bis zur Zentralaussparung 2 reichen oder gar in sie hineinragen. Dies bedeutet, dass die beiden Aussparungen 2 und 6 dann ineinander übergehen. Eine solche Aussparung könnte beispielhaft die gestrichelte Kontur 42 (in FIG 1 ist nur eine von vieren eingezeichnet) besitzen. Dabei ist aber auch obige Ungleichung bezüglich der Querschnittsflächen bzw. der Breiten der Engstellen einzuhalten. Für diese Ausführungsvariante ist FIG 1 nur rein schematisch anzusehen. Insbesondere kann aber diese Ausführungsvariante von Bedeutung sein, wenn die Aussparungen 22 weiter nach unten zu der Zentralaussparung 2 gezogen sind bzw. die Zentralaussparung 2 größer gestaltet ist.

Im vorliegenden Beispiel sind die Aussparungen 6 bzw. 42 alle gleich geformt. Zumindest sollten sie paarweise auf einer d-Achse gleich geformt sein (d.h. die Aussparung auf der einen d-Achsenhälfte sollte so geformt sein wie die Aussparung auf der gegenüberliegenden d-Achsenhälfte), um Spannungen in allen Bereichen des Reluktanzrotorblechs zu verringern. Darüber hinaus besitzen hier alle Aussparungen 6 bzw. 42 den gleichen Abstand zum Zentrum. Jedenfalls sollten auch hier gegenüberliegende Aussparungen vom Zentrum gleich entfernt sein.

Wenn die Aussparung 6 zur Reduktion der mechanischen Spannung in die Zentralaussparung 2 übergeht, greift die Presspassung somit verstärkt oder ausschließlich in den Bereichen der q-Achsen. Die Verformung nach außen im Bereich der d-Achsen 32 wird dadurch ebenfalls gering gehalten, wodurch ebenfalls eine Schonung in den Bereichen 4 erfolgt.

In das Reluktanzrotorblech 18 können ferner Kennmarkenausstanzungen 44 eingebracht sein. Diese dienen beim Fügen des Blechpakets zur besseren Orientierung. Sie sind wesentlich kleiner als die Aussparungen 6 zur Spannungsreduktion und wirken sich somit kaum mechanisch und kaum magnetisch aus.

Erfindungsgemäß werden also verformungsreduzierende Maßnahmen zur Vermeidung von unzulässigen Spannungen in dem Reluktanzrotorblech getroffen. Diese Maßnahmen können durch Ausstanzungen realisiert werden, welche mit dem gleichen Stanzwerkzeug ausgeführt werden wie die übrigen Ausstanzungen in dem Rotorblech. Darüber hinaus kann die Welle des Rotors einfach zylindrisch ausgeführt werden. Die Spannungen an den äußeren Stegen bzw. an dem Verbindungsring 28 verursacht durch den Presssitz werden verringert, wodurch Reserve für Fliehkraftbelastung vorhanden ist und eine Eignung für höhere Drehzahlen gegeben ist. Formschlüsse können also in der Welle vermieden werden. Wegen der Nutzungsmöglichkeit einer zylindrischen Welle ist eine Paketschrägung einfach zu realisieren.

## Patentansprüche

1. Reluktanzrotorblech (18),
- das im Wesentlichen kreisscheibenförmig ausgebildet ist und eine oder mehrere d-Achsen aufweist, wobei jede d-Achse getrennt durch das Zentrum des Reluktanzmotorblechs zwei d-Achsenhälften (32) besitzt, mit
- einer Zentralaussparung (2) im Zentrum des Reluktanzrotorblechs und
- je einem von der Zentralaussparung (2) bis zu einem am Außenrand des Reluktanzrotorblechs befindlichen Verbindungsring (28) sich radial erstreckenden Flussleitabschnitt (24) entlang jeder d-Achsenhälfte (32),
**dadurch gekennzeichnet, dass**
- in dem jedem Flussleitabschnitt (24) auf der jeweiligen d-Achsenhälfte (32) eine Aussparung (6, 42) zur Spannungsreduktion angeordnet ist, so dass zu beiden Seiten der jeweiligen d-Achsenhälfte (32) in dem jeweiligen Flussleitabschnitt (24) je ein Teilleitabschnitt (36, 37) gebildet ist, und
- die Summe des jeweils kleinsten Querschnitts beider Teilleitabschnitte (36, 37) im Wesentlichen größer oder gleich einer kleinsten, zu der jeweiligen d-Achsenhälfte (32) senkrechten Querschnittsfläche des Flussleitabschnitts (36, 37) radial oberhalb der Aussparung ist.

2. Reluktanzrotorblech (18) nach Anspruch 1, wobei die Aussparung (6, 42) zur Spannungsreduktion vollständig vom Material des Reluktanzrotorblechs (18) umgeben ist.

3. Reluktanzrotorblech (18) nach Anspruch 1, wobei ein Hohlraum der Aussparung (6, 42) zur Spannungsreduktion mit einem Hohlraum der Zentralaussparung (2) in Verbindung steht.

4. Reluktanzrotorblech (18) nach einem der vorhergehenden Ansprüche, wobei zwei der d-Achsen (32) senkrecht zueinander und zwei q-Achsen (30) winkelhalbierend zwischen den d-Achsen (32) angeordnet sind, und wobei geschwungene, streifenförmige Blechabschnitte senkrecht an den q-Achsen (30) angeordnet sind und die Blechabschnitte voneinander durch Ausstanzungen (22) getrennt sind.

5. Reluktanzrotorblech (18) nach einem der vorhergehenden Ansprüche, das zusätzlich zu der oder den Aussparungen (6, 42) zur Spannungsreduktion mindestens eine Kennmarkenaussparung (44) aufweist.

6. Reluktanzrotorblech (18) nach einem der vorhergehenden Ansprüche, wobei die Aussparungen (6, 42) auf jeder einzelnen d-Achse oder auf allen d-Achsen gleiche Abmessungen besitzen.

7. Reluktanzrotorblech (18) nach einem der vorhergehenden Ansprüche, wobei die Aussparungen (6, 42) auf jeder einzelnen d-Achse oder auf allen d-Achsen den gleichen Abstand zum Zentrum des Reluktanzrotorblechs besitzen.

8. Reluktanzrotor mit einem Blechpaket (14) aus einer Vielzahl von Reluktanzrotorblechen (18) nach einem der vorhergehenden Ansprüche und einer Welle, die rotatorisch nur durch Reibschluss mit dem Blechpaket (14) verbunden ist.

9. Reluktanzrotor nach Anspruch 8, wobei das Blechpaket (14) geschrägt ist.
